# FASCICULE DE BREVET EUROPEEN

(11) **EP 1 434 187 B1**
(45) Date de publication et mention de la délivrance du brevet: **06.08.2008**
(21) Numéro de dépôt: 03293316.0
(22) Date de dépôt: 24.12.2003
(51) Int. Cl.: G09B 9/00, B63C 11/32, B63C 11/26, A63B 69/12

(54) **Simulateur de plongée sous-marine**
Tauchsimulator
Scuba diving simulator

(30) Priorité: 26.12.2002 FR 0216695
(43) Date de publication de la demande: 30.06.2004
(73) Titulaire: Dinis, Alain, 78590 Noisy le Roi (FR)
(72) Inventeur: Dinis, Alain, 78590 Noisy le Roi (FR)

(56) Documents cités:
- WO-A-01/89921
- US-A- 3 776 574
- US-A- 4 427 385
- US-A- 5 570 688

## Description

La présente invention concerne un appareil qui est associé à un système d'information et à une méthode d'éducation informatisés, permettant la simulation des conditions spécifiques aux activités de plongée sous-marine, en général dans un milieu aquatique contrôlé et, en particulier, dans un bassin.

Le brevet US 4,427,385 concerne un appareil pour simuler la pression de la plongée profonde en mer. Dans une cloche, placée à haute pression, les conditions de pression de l'eau en descente et en remontée de la plongée en mer, sont obtenues par l'effet de la compression d'air ou de gaz dans la chambre où se trouve le plongeur. Cette invention concerne essentiellement un appareil pour la génération dans une enceinte, placée à terre, de la pression subaquatique agissant sur un plongeur. Il ne s'agit pas d'un système global de simulation de la plongée sous-marine.

Le brevet WO 01/89921 A1 concerne un système d'inspection, en mer, de coques de bateaux comprenant une caméra portée par un plongeur, un ordinateur placé hors de l'eau dans le bateau d'un superviseur et un appareil de positionnement se déplaçant autour de la coque du bateau inspecté. Ce système, s'il permet au plongeur de communiquer par le son avec le superviseur, n'est pas conçu pour la simulation de la plongée.

A notre connaissance il n'existe actuellement aucun simulateur de plongée sous-marine sur le marché international. Le développement du simulateur de plongée sous-marine objet de la présente invention, intègre les nouvelles technologies de l'information et de la communication, comme par exemple, la modélisation interactive en trois dimensions de l'environnement des sites de plongée et l'extension de l'internet vers des applications sous-marines.

Ce simulateur de plongée sous-marine pourra intervenir dans la pratique des différentes activités liées au monde sous-marin, tels la formation et la pratique de la plongée, l'accès à l'information sur les sites de plongée et sur la mer, l'éducation des jeunes nageurs et plongeurs, la protection de l'environnement marin, le jeu sur les sujets marins et, en général, la découverte de la mer.
Il assure la préparation surveillée avant la plongée, l'exploration virtuelle des sites de plongée, l'entraînement mesuré et la continuité de la pratique entre les plongées sur les sites. Par ailleurs cette invention élargit le champ de la pratique des exercices aquatiques, en y associant les aspects ludique et culturel.

La plongée sous-marine est un sport et un passe-temps qui intéresse quelques quarante millions de personnes dans le monde.
L'initiation à cette pratique est néanmoins difficilement accessible et relativement peu organisée en comparaison à d'autres sports tels le ski ou la voile. Par ailleurs, la pratique de la plongée sous-marine est peu accessible aux familles et aux jeunes. Puisque sa pratique ne se fait actuellement que dans les sites de plongée, en général près des régions côtières, les opportunités pour un apprentissage aisé et sûr, sont assez limitées. Cette contrainte est l'obstacle principal à la vulgarisation de ce sport. En réduisant considérablement la fréquence de la pratique, elle en accroît ses risques.

Les débutants commencent l'apprentissage de la plongée sous-marine dans une piscine près du site de plongée, sous la surveillance d'un instructeur. Ils apprennent, en particulier, à se familiariser avec le matériel de plongée, à nager sous l'eau respirant l'air des bouteilles, à maintenir leur stabilité et à modifier leur profondeur, en jouant avec les stabilisateurs de plongée.

En général deux ou trois jours après, ils réalisent déjà leur première plongée dans le site, toujours sous la surveillance d'un instructeur. Néanmoins, lors de ces premières plongées dans le site, l'information sur les conditions locales est, en général, insuffisante. Difficultés diverses liées à l'organisation des centres de plongée et aux problèmes de logistique et de communication, rendent parfois peu attrayante cette première expérience.

Au bout d'une semaine ils auront réalisé à peine quelques heures de plongée et, dans la plupart des cas, ne pourront refaire un cycle de plongées qu'une ou deux fois par an. Dans ces conditions la pratique de la plongée restera limitée à une minorité de personnes, vivant à proximité de la mer, en général des adultes.

Les enfants s'intéressent de plus en plus au monde sous-marin et à la richesse de sa faune. Des millions d'enfants, entre 6 et 8 ans, pratiquent la plongée de surface, en général sans aucun programme d'entraînement. Ils n'ont pas la possibilité de faire une transition progressive de cette plongée de surface vers la plongée de profondeur qui leur est permise dès l'âge de 10 ans. Si cela était possible, ces enfants pourraient rejoindre leurs parents qui pratiquent la plongée, pour réaliser des activités en famille. Le simulateur objet de la présente invention permet de faire une transition progressive de la plongée de surface à la plongée de profondeur.

L'apprentissage de la technique de plongée sous-marine se fait à présent essentiellement à l'aide de manuels d'instruction et des vidéos, dont l'attrait et l'efficacité sont discutables, en particulier pour les jeunes débutants. En particulier le maniement et l'opération du matériel de plongée, qui devient de plus en plus compliqué, ne peuvent pas être appris seulement par la lecture de ces manuels. Des aspects essentiels de la plongée, tels les paliers de décompression ou les mélanges d'air, exigent des méthodes d'apprentissage plus modernes et plus conviviales. Certains réflexes essentiels ne peuvent être acquis dans la courte période de temps de l'apprentissage actuel. Il y a donc des progrès à faire dans ce domaine. Le simulateur objet de la présente invention rend cet apprentissage très accessible et facile.

La connaissance des sites de plongée est acquise en général pendant les plongées puisqu'il y a très peu d'informations sur la topographie sous-marine des sites, sur les itinéraires recommandés et même sur les zones où peuvent se trouver les espèces intéressantes de la faune et de la flore. Alors qu'il faudrait des représentations des sites de plongée en 3 dimensions, il n'y a pratiquement pas de cartes des sites en deux dimensions suffisamment détaillées pour permettre aux plongeurs d'étudier et se familiariser avec ces sites, avant de réaliser leur immersion. Cette situation laisse planer sur la plongée un facteur de risque et d'improvisation qui pénalise sa pratique.
Le simulateur de plongée objet de la présente invention apporte un solution à cette question.

L'extension de la pratique de la plongée aux jeunes et aux familles, par le véhicule des techniques de la simulation informatisée et virtuelle, techniques qui sont en plein essor dans des nombreux domaines, permettrait d'élargir la pratique de cette activité, initialement sous sa forme virtuelle, à des millions de personnes, chez-eux, par l'écran de leur ordinateur. Ainsi sensibilisés aux difficultés et aux plaisirs de la plongée sous-marine, ayant à leur disposition des moyens d'apprentissage et de pratique sûrs et facile d'accès, on peut espérer que de très nombreux jeunes seraient dès lors plus attirés par cette activité. La question de la protection de l'extraordinaire patrimoine de l'humanité que représente le monde sous-marin, prendrait alors une dimension à l'échelle du défi que sa survie nous pose actuellement.

L'objectif de la présente invention est de répondre à ces différents besoins et de remplir une lacune dans la pratique de la plongée sous-marine, en créant un simulateur de plongée qui intègre les trois composantes suivantes :
- un appareil, placé dans un milieu aquatique, qui simule au plongeur sous-marin, les conditions physiques qu'il rencontrera dans un site réel de plongée, qu'il peut choisir, et lui permet d'apprendre et de pratiquer la plongée suivant son propre programme d'entraînement.
- une méthode d'instruction informatisée, assurée par la liaison de cet appareil à un ordinateur muni d'un moniteur, qui permet à un instructeur placé dans les environs de voir, de suivre et de mesurer les activités du plongeur sous l'eau, à tout moment et en temps réel, et de se communiquer avec lui.
- un système d'information informatisée, transmis par cet appareil au plongeur, directement en réponse à ses commandes, qui lui permettra de simuler les aspects visuels et de récréer les impressions et les contraintes psychologiques de la plongée réelle, dans le site de plongée sélectionné et en suivant un trajet de plongée qu'il aura choisi.

Cet objectif est résolu avec un simulateur de plongée ayant les caractéristiques de la revendication 1.

Le simulateur de plongée est conçu pour être adaptable aux divers milieux aquatiques tels les piscines publiques et privées, les fosses de plongée, les lacs, les rivières et les zones maritimes proches des sites de plongée. Grâce à sa conception modulaire, à sa légèreté et à sa transportabilité, il peut s'adapter à ces différents milieux et devenir opérationnel assez rapidement. Les profondeurs d'eau pour lesquelles le simulateur est conçu varient pour les piscines entre deux et cinq mètres et pourraient atteindre environ 40 mètres, dans les fosses de plongée et dans les zones proches des sites de plongée. Des adaptations sont prévues, entre autres, pour l'utilisation de l'appareil en mer et pour introduire dans la simulation, l'effet du déplacement et des courants.

L'utilisation la plus courante étant prévue dans les bassins, c'est ce modèle qui sera pris pour le simulateur de base, les autres versions étant définies par rapport à ce modèle.

Le modèle de base du simulateur de plongée objet de la présente invention est constitué essentiellement par trois modules que nous allons décrire à présent :
1. Le premier module du simulateur, est un appareil placé dans une piscine sur son bord le plus profond, essentiellement composé par une visionneuse hémisphérique immergée et par une structure de support, généralement fixée aux parois de la piscine.
   La visionneuse hémisphérique comporte cinq éléments principaux : un moniteur plat d'ordinateur, la visière conique, au moins une caméra vidéo, un guidon de commande articulé sur la visionneuse où sont intégrés les manches, les manettes, le tableau de commande avec les boutons de contrôle. Dans l'articulation du guidon de commande des senseurs dûment calibrés permettent de mesurer l'effort que le plongeur applique sur le guidon en mouvant ses palmes et le convertit en vitesse d'avancement. Le plongeur se tient au guidon d'une main et peut utiliser l'autre main pour opérer les diverses commandes du tableau.
   La structure de support a quatre composants principaux : la colonne sur laquelle vient s'articuler la visionneuse, le système télescopique fixé à la base permettant de régler la hauteur de la colonne et le boîtier de raccordement en haut de la colonne, hors de l'eau, où viennent se loger tous le mécanismes et raccordements du simulateur. L'appareil qui vient d'être décrit sommairement, est raccordé à un second module.
2. Le second module du simulateur, est une méthode informatisée d'apprentissage de la plongée. Il est constitué par un ordinateur équipé d'un moniteur, où sont intégrés les bases de données avec les informations concernant l'instruction de la plongée, les normes et recommandations de sécurité, les critères de classement des plongeurs, leurs profils, leurs rapports de plongées, les informations sur le matériel de plongée, les mesures à prendre en cas d'accident et en général, une méthode d'instruction couvrant les sujets qu'un instructeur professionnel de plongée doit connaître. Toutes ces informations sont, en général, enregistrées et conservées dans les CD-rom. Ce module peut se trouver dans les environs de la piscine et est utilisé par l'instructeur chargé de l'apprentissage et de l'entraînement du plongeur, ou des plongeurs, au cas ou plusieurs simulateurs seraient installés dans la même piscine. Cet instructeur reçoit de la camera, en continu, les vues du plongeur et lui transmet de son ordinateur des instructions que le plongeur reçoit dans son moniteur. Par ailleurs le plongeur peut aussi communiquer avec l'instructeur par des messages qu'il émet de son tableau de commande.
3. Le troisième module du simulateur, installé dans une unité centrale, généralement loin des autres deux modules, est un système informatisé d'information sur les sites de plongée. Il est lié aux modules précédents par l'internet où par un réseau local, et comprend des programmes informatiques, des bases de données et d'autres informations qui concernent le plongeur avant, pendant et après sa session d'entraînement.

Avant son immersion, ce système lui permet de se préparer correctement à la plongée et de sélectionner le site et le trajet approprié. Il peut même faire cette préparation chez lui, en utilisant son ordinateur personnel ou le faire juste avant la session, en utilisant l'ordinateur de l'instructeur.
Pendant son immersion il peut accéder à tout moment à ces informations, en utilisant les différentes commandes de son tableau de commande et en les suivant sur son moniteur. Il pourra ainsi réaliser sa plongée avec nombreuses impressions sensorielles et psychologiques comparables à celles de la plongée réelle dans un site.
Après la session, il pourra étudier sa performance à la lumière des observations de l'instructeur et la comparer à celles d'autres plongeurs.
Ce système est essentiellement déterminé par les contraintes de la simulation de plongée et a pour objet principal, rendre cette simulation aussi proche que possible de la plongée réelle. Ainsi, par exemple, c'est dans ce module que :
1-sont modélisés en 3D les fonds des différents sites de plongée,
2-pour chaque site, quatre itinéraires de plongée, avec leurs paramètres, sont proposés aux plongeurs en fonction de leur niveau,
3-la faune et la flore des sites sont représentées dans leurs zones respectives,
4-se trouve l'information sur la condition des sites de plongée, tels courants, températures, dangers potentiels, précautions spéciales ainsi que l'information touristique courante.
Une partie de ces informations pourraient, en général, être stockées dans des CD-rom.

Nous allons maintenant décrire le fonctionnement intégré des trois modules qui constituent le simulateur de plongée.

Le plongeur, avant l'immersion dans le bassin, choisi entre les sites de plongée répertoriés dans le monde, celui où il souhaite réaliser sa session d'entraînement et prépare, avec l'assistance de son instructeur, la plongée virtuelle dans ce site, détermine l'itinéraire le plus approprié pour son niveau, inspecte la topographie des fonds, considère les paramètres tels la durée, les courants, les contrôles, les paliers de décompression et les précautions spécifiques à prendre. Il utilise alors l'ordinateur de l'instructeur pour accéder au système informatisé d'information, par l'internet. Il peut aussi accéder à la méthode informatisée d'apprentissage, lors de la vérification du matériel de plongée qu'il va devoir utiliser pendant la session d'immersion ou pour un rappel du manuel technique de plongée. Pendant cette première étape, le plongeur se prépare et obtient toute l'information nécessaire pour réaliser la plongée virtuelle dans les meilleures conditions de sécurité et pour atteindre les objectifs qu'il s'est fixé.

L'étape suivante consiste à s'équiper comme pour une vraie plongée, avec la bouteille, masque, palmes, équipement et instruments, de réaliser l'immersion dans la piscine et de prendre en main les contrôles de l'appareil. Néanmoins, il peut aussi se limiter à la plongée de surface, seulement avec un tuba ou à la plongée de mi -profondeur avec un tuyau spécial. A partir de ce moment commence la plongée dans la réalité virtuelle.

Sur son moniteur, le plongeur peut apercevoir le site où il a choisi de réaliser sa séance d'entraînement ainsi que le tracé de l'itinéraire le plus approprié. Il initie sa descente virtuelle à laquelle correspond un mouvement vertical de descente de sa propre position dans le bassin. Ce mouvement est fait avec un facteur réducteur. Le plongeur reste toujours face au moniteur de la visionneuse qui se déplace vers le bas ou vers le haut, suivant les variations de profondeur du parcours. Sur son moniteur il a la vision en 3D du site, tel qu'il le verrait en réalité, les images des fonds marins se déroulant devant lui, avec la flore et faune, l'indication des lectures des différents instruments. Il reste sous surveillance constante de son instructeur. A la fin de son parcours, le plongeur réalise la remontée virtuelle en suivant les instructions concernant le temps et les paliers de décompression.

Pendant cette étape, le plongeur retrouve les nombreuses conditions sensorielles et mentales de la plongée réelle : il est en immersion totale, en état d'apesanteur, porte l'équipement et est habillé pour la plongée, respire l'air de la bouteille dont il surveille la réserve, vérifie les données des instruments de plongée, gère sa profondeur de plongée, maintient en mouvement ses palmes pour conserver la pression sur le guidon et donc pour assurer son déplacement virtuel, voit se dérouler sur son moniteur l'environnement en 3D interactif du site réel et doit agir sur les commandes de son tableau pour se déplacer le plus harmonieusement possible, suivant le parcours choisi.

Une fois hors de l'eau le plongeur, avec son instructeur, analyse le rapport de sa session d'entraînement, produit par la méthode informatisée d'apprentissage, compare sa performance avec celle des sessions précédentes et les standards, note les fautes et prépare le programme de la session suivante.

Les caractéristiques et les avantages de cette invention vont apparaître plus clairement à la lecture de la description détaillée qui suit, d'au moins une des formes de réalisation préférée de l'invention, donné à titre d'exemple non limitatif et représenté aux dessins en annexe.

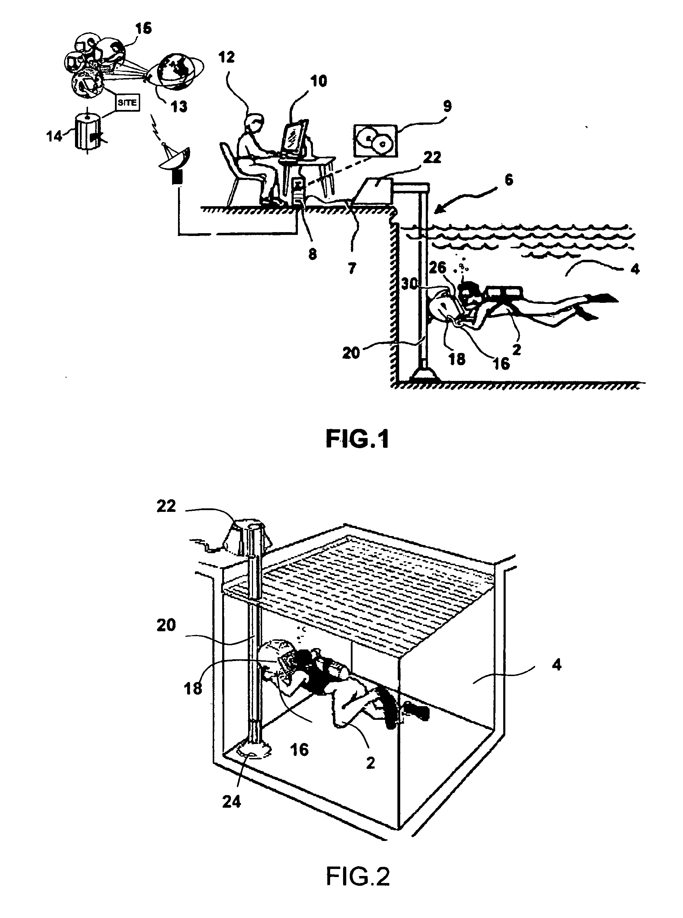

La figure 1 représente en coupe, le concept général de l'invention, avec ses trois modules.
On y voit le plongeur (2), entièrement équipé pour la plongée sous-marine, s'entraînant en immersion complète, dans le bassin (4) et se tenant à l'appareil (6). Cet appareil est la partie matérielle de l'invention.
L'appareil est connecté (7) à un ordinateur (8), disposant d'un moniteur (10 ) qui est utilisé par l'instructeur (12) qui assure la formation et la surveillance du plongeur et qui couvre tous les aspects de la technique de plongée, en particulier la sécurité. Des CD-rom (9) sont disponibles avec ces informations.
En outre, ce ordinateur (8 ) est aussi raccordé à l'internet, schématiquement représenté par (13), permettant donc au plongeur l'accès direct à toute l'information nécessaire pour créer la simulation de plongée, en réalité et en temps réel. Cette information est disponible dans le système d'information informatisé (14) d'une part et d'autre part pourrait être délivrée par d'autres internautes, en particulier, ceux de la communauté des plongeurs (15).

La figure 2 présente en perspective, le plongeur (2) immergé et en activité dans le bassin (4), se tenant au guidon (16) de la visionneuse (18) qui est fixée à la colonne (20), laquelle est tenue en haut de la piscine par le boîtier (22) et en bas de la piscine par le socle (24).

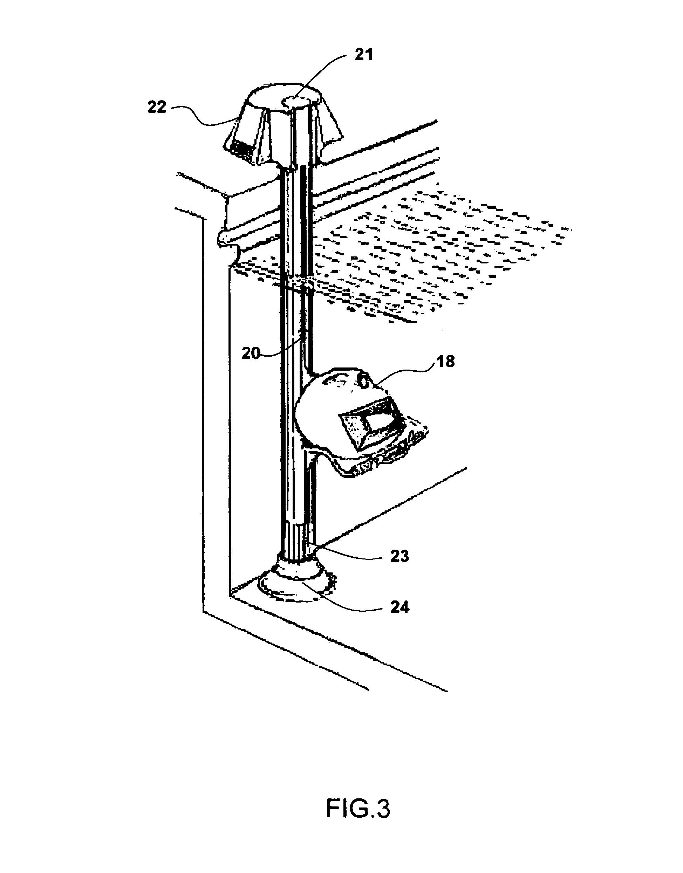

La figure 3 présente l'appareil avec ses quatre composants principaux :
- la colonne tubulaire (20) sur laquelle glisse verticalement la visionneuse (18) sous l'action d'un dispositif hydraulique logé à l'intérieur de la colonne et attaché à la visionneuse. Celui-ci produit des déplacements verticaux de la visionneuse, entre les niveaux d'immersion minimum et maximum, déterminés par la profondeur du bassin.
- le système télescopique (23) fixé en bas de la colonne permettant d'ajuster avec précision la longueur de celle-ci à la profondeur du bassin,
- le socle (24) et
- le boîtier de raccordement (22) en haut de la colonne.

Ces éléments sont fabriqués généralement en métal, de préférence en acier, la colonne pouvant être en acier inoxydable ou galvanisé. Les moteurs et autres mécanismes ainsi que les composants électriques sont placés dans le boîtier étanche, hors de l'eau, en général fixé au sol.
La visionneuse peut être facilement détachée et conservée hors de l'eau après la session d'entraînement.

### L'installation de ces éléments se fait comme suit :

Le boîtier (22) est placé et fixé au sol. La colonne (20) est introduite par le haut dans la réservation circulaire (21) du boîtier. Avant de descendre la colonne dans l'eau, le socle (24) y est attaché. Une fois la colonne descendue et la base posée sur le fond, on glisse la visionneuse (18) par le haut de la colonne et on l'attache à la colonne.

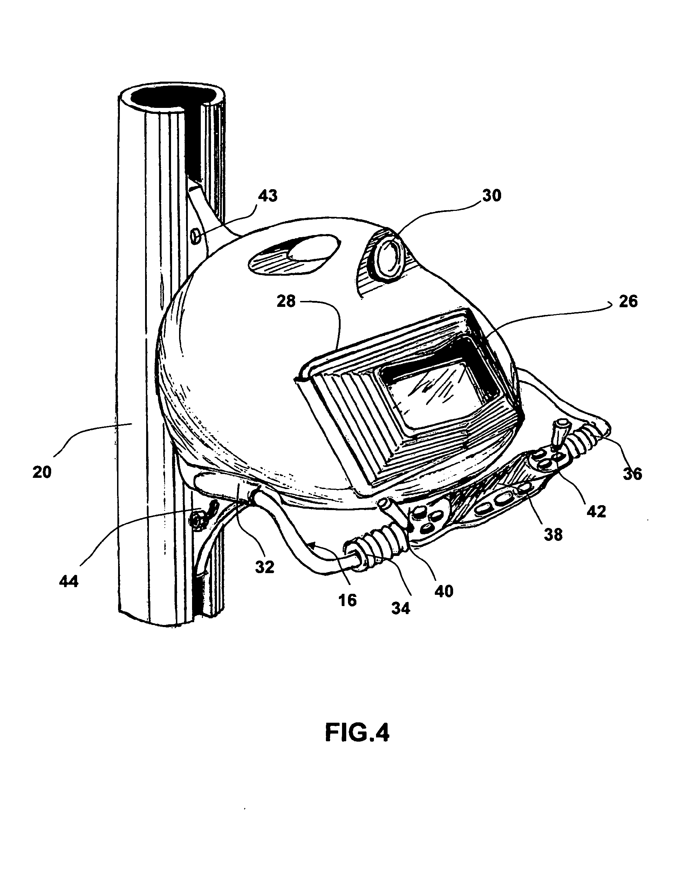

La figure 4 donne une vue détaillée et en perspective de la visionneuse (18).
La visionneuse (18) est une coque métallique de forme hémisphérique. Elle est étanche et résistante aux impacts et comporte cinq éléments principaux : un moniteur plat d'ordinateur (26) qui se trouve placé à l'intérieur de la visionneuse, la visière tronconique souple et détachable (28), au moins une caméra vidéo (30), un guidon de commande (16) articulé sur la visionneuse par un dispositif (32).
Dans le guidon sont intégrés les poignées (34) et (36), le tableau de bord (38) avec les manettes de contrôle (40) et (42) et les différents boutons de commande. L'ensemble est recouvert par une pellicule d'élastomère synthétique assurant l'étanchéité.
Dans l'articulation (32) du guidon de commande sont placés des senseurs dûment calibrés qui permettent de mesurer l'effort que le plongeur applique sur le guidon en mouvant ses palmes. Ces senseurs convertissent cet effort en vitesse équivalente d'avancement du plongeur dans l'eau.

Le plongeur se tient généralement aux poignées (34,36) du guidon (16) avec ses deux mains. Quand nécessaire pour l'opération, il peut se tenir avec une seule main et utiliser l'autre main pour manier les diverses commandes du tableau de commande.

La visionneuse est fixée à la colonne de support tubulaire métallique (20) par un axe (43) et une articulation (44) qui permettent la rotation de la visionneuse autour d'un axe horizontal pour s'adapter aux angles de vision différents des plongeurs.

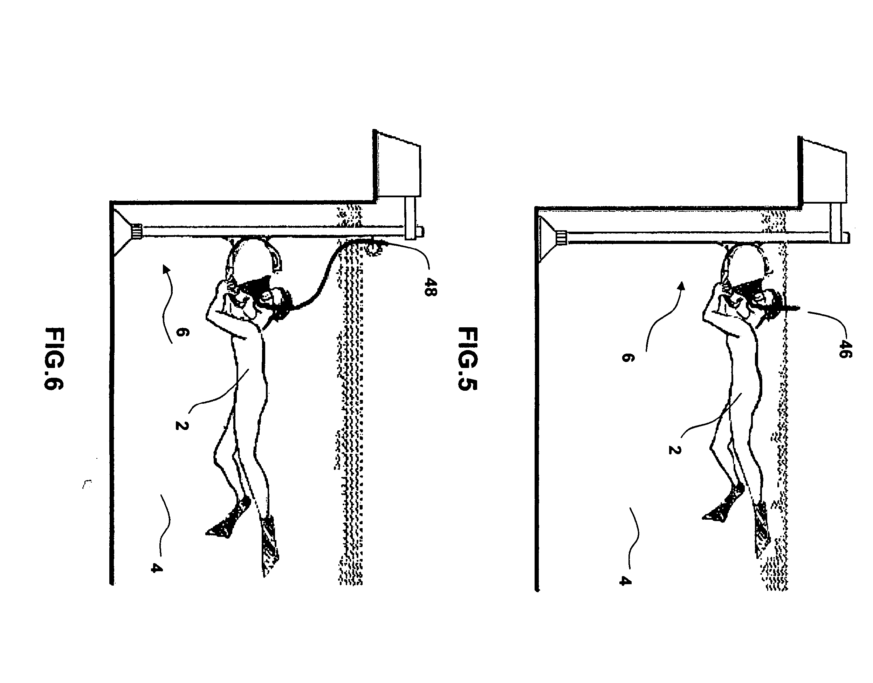

La figure 5 montre la configuration de l'appareil avec la visionneuse placée au niveau d'immersion minimum, pour la pratique de la plongée de surface avec le tuba. On y voit le plongeur (2) muni d'un tuba (46), pratiquer la nage sous l'eau, près de la surface, dans un bassin (4) en utilisant le même appareil (6). Cette caractéristique du simulateur permet son utilisation dans la formation des enfants à la plongée de surface, avec le tuba, et assure leur préparation progressive à la plongée sous-marine, sous surveillance d'un instructeur, dès que leur âge et compétences le permettent.

La figure 6 montre le plongeur (2) équipé d'un tuyau spécial (48) utilisant le même appareil (6). Le tuyau lui permet de descendre un peu plus profond dans le bassin, sans aucun équipement spécifique de plongée.

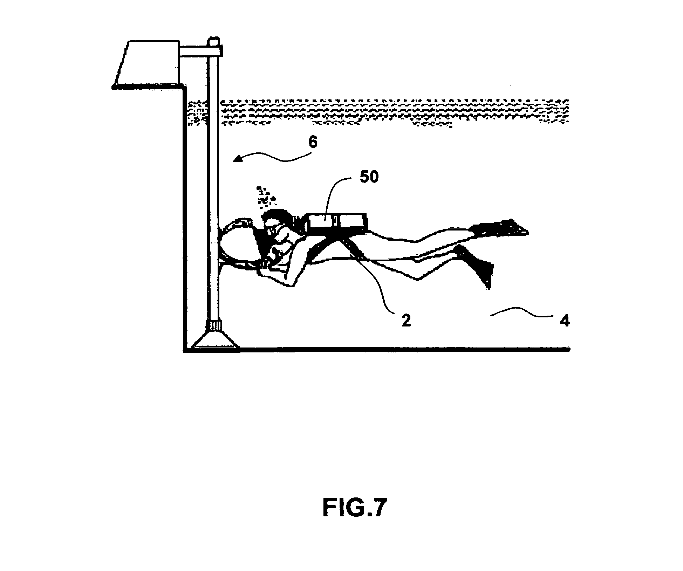

La figure 7 montre l'étape suivante de l'apprentissage, avec le plongeur (2) maintenant équipé comme pour la plongée en mer, avec la bouteille (50), utilisant toujours le même appareil (6) et pouvant descendre sans limitation de profondeur dans le bassin (4).

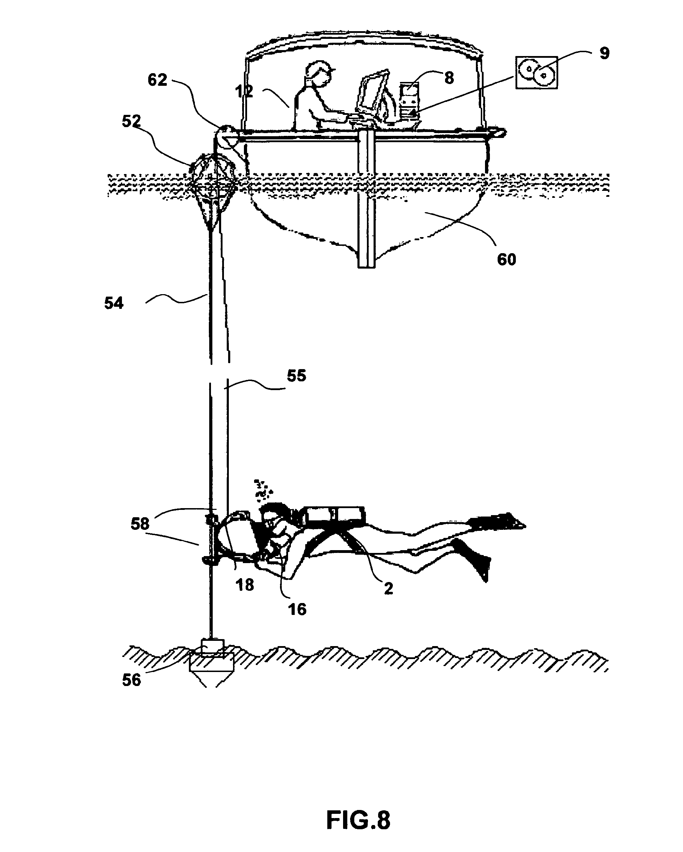

La figure 8 présente une autre configuration préférée de l'invention, pour les plongeurs s'entraînant en mer, généralement avant la plongée dans le site. Cet arrangement leur permet de se familiariser avec la profondeur d'eau, avec les courants sous-marins et avec un environnement généralement similaire à celui de ce site, sous la surveillance de l'instructeur.

Par ailleurs, cette configuration de l'invention permet aux plongeurs, après avoir effectué leur parcours dans le site, de réaliser la remontée suivant les instructions transmises par l'instructeur en particulier pour ce qui concerne les paliers de décompression qui lui seront clairement indiqués dans le moniteur de la visionneuse.

Les plongeurs ayant suivi l'instruction et réalisée la pratique de la plongée en piscine, avec le simulateur objet de l'invention, peuvent utiliser cette adaptation de l'appareil pour l'entraînement en mer profonde, comme décrit dans l'exemple suivant, choisi entre les autres.

D'une bouée (52) un câble (54) tendu par un contrepoids (56) sert de glissière pour la visionneuse (18), équipée de guides spéciaux (58). Un bateau (60), accroché à la bouée, où se trouve un instructeur (12) équipé d'un ordinateur (8), des CD-rom (9) et d'un moniteur (10), possède un treuil électrique (62) ou vient s'enrouler le câble (64) auquel est suspendu la visionneuse (18) et qui se compose d'une gaine souple et étanche, résistante à l'abrasion, contenant un câble de traction et le câble alimentant le moniteur de la visionneuse ainsi que ses commandes. Le plongeur (2) peut aussi être attaché à ce câble, si les conditions de sécurité du milieu l'exigent.

Le câble guide et le câble de suspension ont la longueur requise pour simuler la profondeur du site, permettant au plongeur de réaliser la descente d'entraînement en se tenant au guidon (16) de la visionneuse et donc en sécurité et sous contrôle, de se familiariser avec les conditions spécifiques du site.
Après la visite du site, ce système permet au plongeur de faire la remontée en suivant la procédure appropriée et en prenant les précautions qui seraient décidées de commun accord avec l'instructeur. Le treuil électrique (62) peut être muni d'un lecteur et d'une commande qui programmerait la remontée en suivant les paliers recommandés. La remontée, une des phases les plus critiques de la plongée, serait ainsi réalisée en toute sécurité, avec la nécessaire préparation et sous contrôle du plongeur et de son instructeur.

Cette disposition du simulateur de plongée peut encore être utilisée pour le contrôle du matériel de plongée, pour les épreuves de sauvetage, pour l'entraînement des plongeurs aux conditions les plus défavorables des courants, de visibilité ou d'accessibilité.

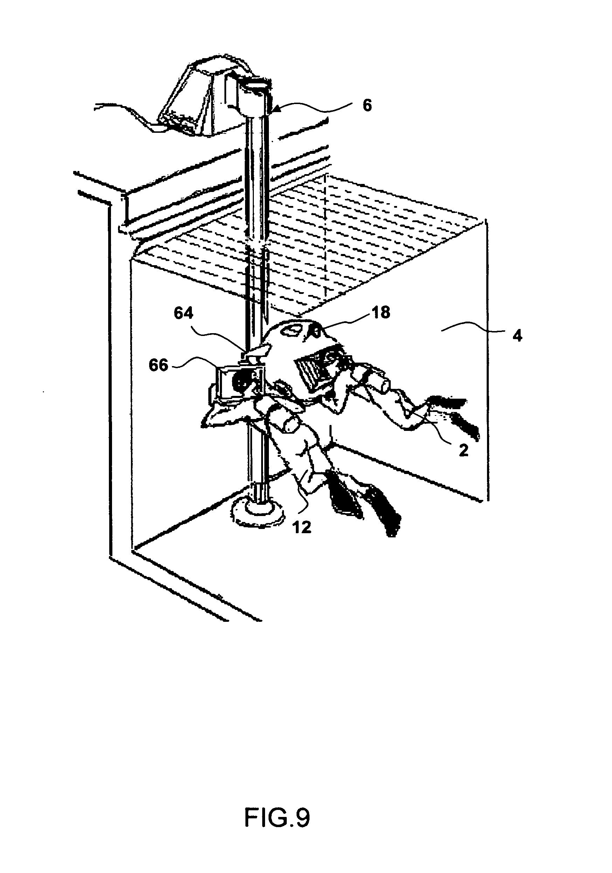

La figure 9 présente une autre configuration privilégiée de l'invention. Dans le schéma de base représenté dans la figure 1, l'instructeur (12) se trouve hors du bassin (4), à une certaine distance du plongeur (2). Dans la présente configuration, le plongeur (2) et son instructeur (12) se trouvent dans le même bassin (4) côte à côte, pendant la session de pratique de plongée avec l'appareil (6). Dans cette configuration à la visionneuse (18) est ajouté un bras articulé (64) qui porte un moniteur (66) raccordé au même ordinateur, que l'instructeur utilise pour surveiller la pratique du plongeur et qui reçoit les mêmes images et informations que celles du moniteur du plongeur.
Une autre adaptation de l'invention concerne l'introduction du facteur courant de l'eau dans les conditions de la simulation. Le courant étant un des facteurs à risque de la plongée sous-marine, il peut s'avérer parfois important de l'ajouter dans le processus l'entraînement.

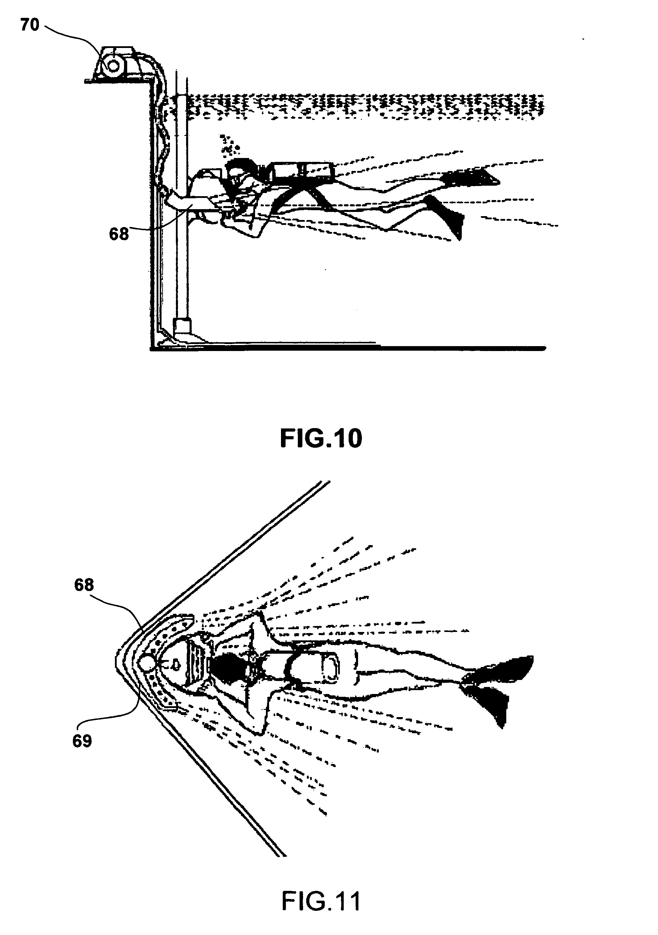

Les figures 10 et 11 montrent, respectivement en élévation et en plan, le principe d'un générateur de courant semi-circulaire (68) adossé au simulateur qui permet de envoyer un jet d'eau, pompée dans la même piscine, sur le plongeur simulant un contre-courant sous-marin. En réglant la puissance du pompage on peut faire varier la force du courant. Par ailleurs on peut faire varier la direction du courant en agissant sur les vannes placées dans les ouvertures de la conduite (69).
Le système de pompage (70) et d'injection de l'eau pour créer ce courant ainsi que les dispositifs de réglage de débit de la pompe et de variation de l'orientation du courant peuvent être conçus comme des accessoires qui seraient ajoutés à l'appareil de base.

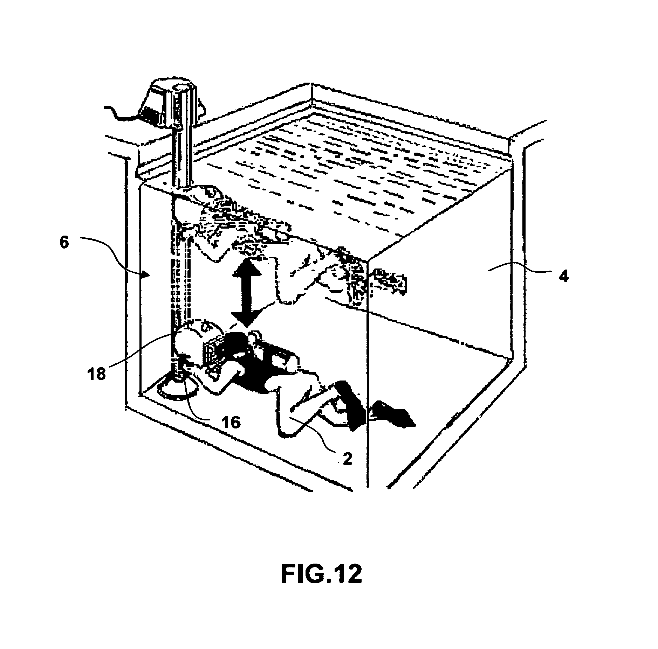

La figure 12 illustre les mouvements verticaux que le plongeur (2) peut déclencher dans l'appareil (6) en actionnant les manchons du guidon (16). Le dispositif hydraulique logé dans le la colonne fait glisser la visionneuse (18) vers le haut et vers le bas, simulant des changements de profondeur de la plongée.

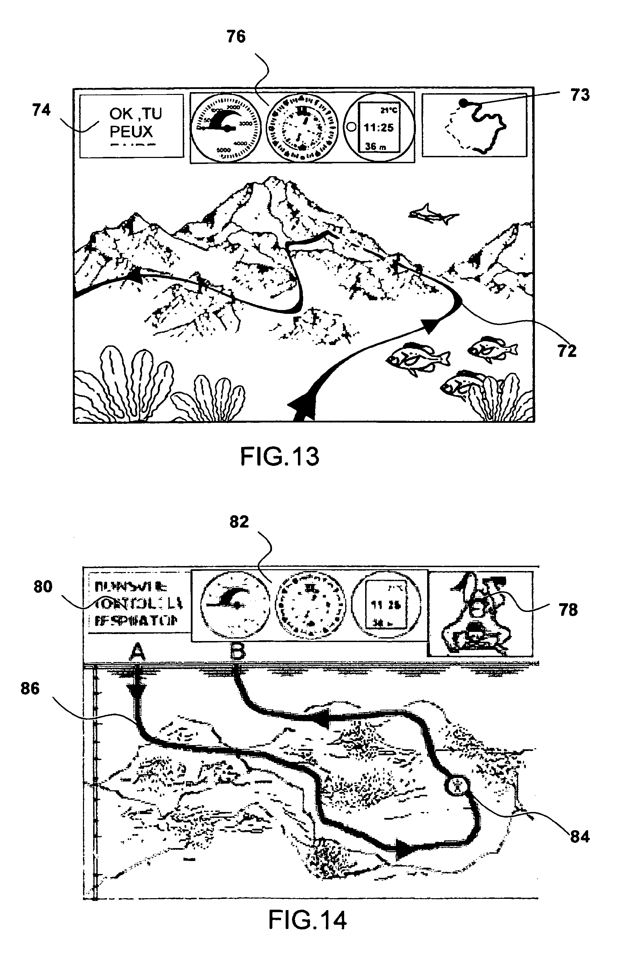

La figure 13 donne un exemple des représentations que le plongeur voit successivement sur le moniteur de sa visionneuse. Une vue du site où a lieu sa session d'entraînement apparaît en 3D avec le parcours sélectionné ainsi que des indications sur la flore et la faune de la zone. Sur le parcours virtuel (72) qu'il est en train de réaliser, il se trouve à l'endroit (73). Des directives de son instructeur apparaissent dans la fenêtre (74). La fenêtre (76) donne des indications de ses instruments de plongée, de la réserve d'air, du temps passé, du temps restant, etc.

La figure 14 donne un exemple des représentations que l'instructeur voit apparaître sur son moniteur. Dans la fenêtre (78) il aperçoit continuellement le plongeur, grâce à la camera vidéo installée sur la visionneuse. Dans la fenêtre (80) il reçoit des messages du plongeur. Dans la fenêtre (82) il a les mêmes indications sur les instruments de plongée que ceux de la fenêtre (76) du plongeur. Par ailleurs il surveille la progression du plongeur qui se trouve à ce moment à l'endroit (84), depuis le point d'immersion A jusqu'à son point de remontée B, suivant le parcours (86).

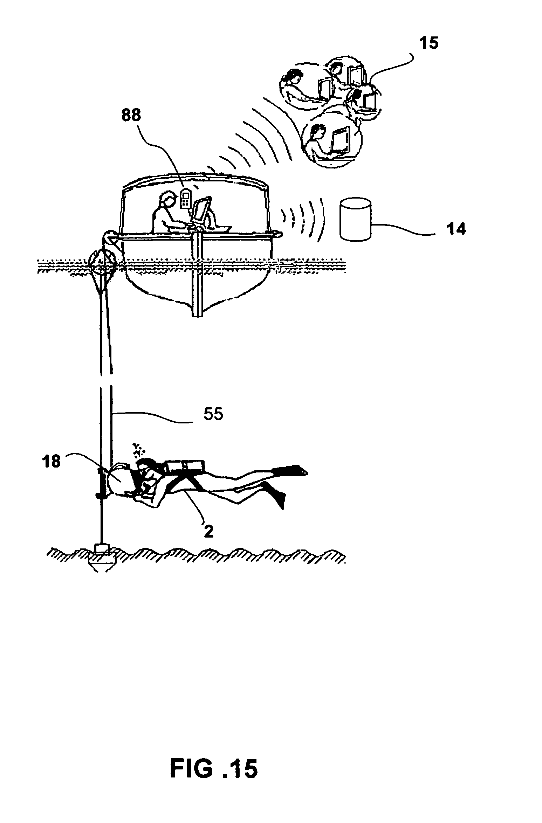

La figure 15 montre le plongeur (2) dans le site de plongée, lors des dernières sessions d'entraînement, avant de initier son parcours ou après l'avoir réalisé. Le simulateur présente la même configuration que celle de la figure 8 mais, par le raccordement d'un téléphone cellulaire (88) au terminal informatique (8) de l'instructeur, le plongeur en mer peut communiquer par l'internet et a accès direct à toute l'information nécessaire pour se préparer pour la plongée réelle ou pour commenter des aspects de la plongée qu'il vient de réaliser. Cette information est disponible dans le système d'information informatisé (14) d'une part et d'autre part pourrait être délivrée par d'autres internautes, en particulier, ceux de la communauté des plongeurs (15), notamment dans le cadre d'organisation d'événements mettant en scène un scénario ludique où les acteurs seraient des plongeurs et des internautes.

## Revendications

1. Simulateur de plongée sous-marine pour l'apprentissage et la pratique de la plongée en milieu sécurisé, par exemple un bassin, **caractérisé en ce qu'**il est composé d'un appareil (6) placé sous l'eau comprenant une visionneuse(18) capable de simuler à un plongeur sous-marin les conditions physiques qu'il peut rencontrer dans un site réel de plongée, d'un ordinateur pour un l'instructeur (12) muni d'un moniteur (10) et d'un ordinateur (8) intégrable au réseau internet, auquel les dits appareil et ordinateur sont raccordés.

2. Simulateur de plongée sous-marine selon la revendication 1, **caractérisé en ce que** l'appareil (6), est composé au moins, de quatre éléments :
ladite visionneuse (18), une colonne de support de la dite visionneuse (20), un socle (24) et un boîtier supérieur de fixation (22) placé hors de l'eau et contenant des mécanismes et des connexions.

3. Simulateur de plongée sous-marine selon la revendication 2, **caractérisé en ce que** la visionneuse (18) est une coque hermétique, étanche et résistante aux impacts, de forme hémisphérique, contenant au moins un moniteur d'ordinateur (26) et une camera vidéo (30) et que à la dite coque sont fixés une visière (28) et un guidon (16).

4. Simulateur de plongée sous-marine selon la revendication 2, **caractérisé en ce que** dans la colonne (20) est ajouté un dispositif qui permet à la visionneuse (18) de glisser verticalement sur la dite colonne, vers le haut et vers le bas, le dit dispositif comportant un guidon (16) dans lequel sont logées des commandes et des poignées (34 ou 36), aux quelles poignées un plongeur peut se tenir (2), le dit plongeur étant ainsi entraîné par les mouvements de la dite visionneuse.

5. Simulateur de plongée sous-marine selon la revendication 2, **caractérisé en ce qu'**il comporte un dispositif complémentaire (68) alimenté par exemple par une pompe (70) pouvant injecter de l'eau sous pression autour d'un plongeur, pour créer des courants s'opposant au déplacement du dit plongeur (2).

6. Simulateur de plongée sous-marine selon la revendication 1, **caractérisé en ce que** la visionneuse (18) équipée de glissières (58) se déplace sur un câble (54) tendu et lesté par un ancrage (56).

7. Simulateur de plongée sous-marine selon la revendication 3, **caractérisé en ce que** la camera vidéo (30), permet au plongeur (2) d'être vu et surveillé en permanence par un instructeur (12) placé hors de l'eau et équipé pour recevoir l'image du plongeur sur son moniteur (10).

8. Simulateur de plongée sous-marine selon la revendication 3, **caractérisé en ce que** le moniteur d'ordinateur (26) placé dans la visionneuse (18) est équipé pour recevoir des images et des messages directement d'un l'instructeur (12) ou par le réseau internet (13).

9. Simulateur de plongée sous-marine selon la revendication 3, **caractérisée en ce que** la visionneuse est articulée sur la colonne (20) et que sa position peut être modifiée et ajustée, en fonction de l'angle de vision d'un plongeur.

10. Simulateur de plongée sous-marine selon la revendication 3, **caractérisée en ce que** la visionneuse (18) dispose du guidon (16) généralement muni de deux poignées (34) et (36), de deux manettes (40) et (42) et de boutons sur un tableau de commande (38) et que les dits dispositifs sont prévus pour l'opération de l'ordinateur d'un instructeur (8) et du moniteur (26).

11. Simulateur de plongée sous-marine selon la revendication 3, **caractérisé en ce que** le guidon (16) est équipé, à l'endroit (32) où il se fixe à la visionneuse, de senseurs pour la mesure de la pression exercée par un plongeur et que les dits senseurs sont calibrés pour convertir la dite pression en vitesse équivalente du dit plongeur dans l'eau.

12. Simulateur de plongée sous-marine selon la revendication 3, **caractérisé en ce que** la visionneuse comporte une visière (28) détachable.

13. Simulateur de plongée sous-marine suivant la revendication 8, **caractérisé en ce qu'**il est équipé pour permettre l'accès à un logiciel et à une base de données spécialement conçus pour le dit simulateur (14) et permettant l'édition et la représentation en 3D interactif, des fonds marins.

14. Simulateur de plongée sous-marine suivant la revendication 8, **caractérisé en ce qu'**il est équipé d'un logiciel didactique et d'une base de données sur les techniques de plongée, spécialement élaborés pour le dit simulateur et stockés dans l'ordinateur de l'instructeur (8) ou gravés dans les CD-rom (9).

15. Simulateur de plongée sous-marine suivant la revendication 8, **caractérisé en ce qu'**il est équipé d'un logiciel qui génère en temps réel, pour un parcours de plongée déterminé (72), les données telles la position (84), la consommation d'air, l'orientation et la profondeur (82).

16. Simulateur de plongée sous-marine suivant la revendication 8, **caractérisé en ce que,** en plus du moniteur d'ordinateur (26) placé à l'intérieur de la visionneuse (18), il peut comporter un second moniteur (66) placé hors de la visionneuse (18), ce second moniteur permettant à l'instructeur (12) d'accompagner, en immersion, le plongeur (2).

17. Simulateur de plongée sous-marine selon la revendication 13, **caractérisé en ce qu'**il comporte un logiciel et un base de données qui permettent la sélection d'un site de plongée, un parcours virtuel (72) dans le dit site et la vue du dit site en 3D interactif dans le moniteur (26) de la visionneuse (18).

18. Simulateur de plongée sous-marine selon la revendication 4, **caractérisé en ce qu'**il est prévu pour un plongeur avec un tuba (46) de remonter la visionneuse (18) sur la colonne (20) et de fixer la dite visionneuse au niveau voulu.

19. Simulateur de plongée sous-marine selon la revendication 4, **caractérisé en ce qu'**il est prévu de fixer la visionneuse (18) à mi-hauteur de la colonne (20) pour l'apprentissage et a pratique de la plongée avec un narguilé (48).

20. Simulateur de plongée sous-marine selon la revendication 6, **caractérisé en ce que** le mouvement du treuil (62) de rétention de la visionneuse (18), lors de la descente et lors de la remontée d'un plongeur est commandé par le dit plongeur (2) ou par son instructeur (12).

21. Simulateur de plongée sous-marine selon la revendication 6, **caractérisé en ce que** l'ordinateur (8) d'un instructeur (12) est raccordé à un téléphone cellulaire (88) et permet à un plongeur (2) d'accéder au dit téléphone par le câble (64) et de communiquer par le réseau internet.

## Claims

1. Scuba diving simulator for learning and practice of diving in a secured environment, for instance a pool, wherein said simulator is composed by a device (6) placed under the water, that include a viewer (18) capable to simulate to a underwater diver the physical conditions that he may experience in a real scuba diving site, of a computer for an instructor (12) equipped with a monitor (10) and of a station (8) that may be integrated in the internet, to which said device and the computer are connected.

2. Scuba diving simulator according to claim 1, wherein the device (6) is composed at least, by four elements:
said viewer (18), a support column of the said viewer,(20), a base (24) and a superior sustaining casing (22), placed outside the water and containing mechanisms and connections.

3. Scuba diving simulator according to claim 2, wherein the viewer (18) is a hermetic casing, watertight and resistant to impacts, with a hemispheric shape, containing at least the monitor of a computer (26) and a video camera (30) and that to the said casing are fixed a eyeshade (28) and handlebar (16).

4. Scuba diving simulator according to claim 2, wherein in the column (20) is added a device that allows the viewer (18) to slide vertically over the said column, up and down, said device being equipped with a handlebar (16) in which are housed controls and handles (34 or 36) to which said handles a diver can hold himself (2) said diver being thus dragged along by the movements of said viewer.

5. Scuba diving simulator according to claim 2, wherein it comprises an additional device (68) fed for instance by a pomp (70) that can inject water at pressure around the diver, to create water currents opposing to the advancement of said diver.

6. Scuba diving simulator according to claim 2, wherein the viewer (18) equipped with guiding rollers (58) slides along a cable (54) tensioned and ballasted by an anchor (56).

7. Scuba diving simulator of claim 3, wherein the video camera (30) allows the diver (2) to be seen and surveyed permanently by a instructor (12) place outside the water and equipped to receive the image of said diver on his monitor (10).

8. Scuba diving simulator according to the claim 3, wherein the computer monitor (26) placed inside the viewer (18) is equipped to receive images and messages directly from the instructor (12) or through the internet (13).

9. Scuba diving simulator according in claim 3 wherein the viewer is hinged over the column (20) and that its position can be modified and adjusted in function of the diver's angle of view.

10. Scuba diving simulator according to claim 3, wherein the viewer (18) has a handlebar (16) generally equipped with two handles (34) and (36), of two joysticks (40) and (42) and of buttons over a control panel (38) and that said devices are provided for the operation of the computer of the instructor (8) and of the monitor (26).

11. Scuba diving simulator according to claim 3, wherein the handlebar (16) is equipped, at point (32) where it is connected to the viewer, with sensors for measure of pressure applied by a diver and that said sensors are calibrated to convert said pressure into equivalent speed of said diver in the water.

12. Scuba diving simulator according to claim 3 wherein the viewer comprises a detachable eyeshade (28).

13. Scuba diving simulator according to claim 8, wherein it is equipped to have access to a software and to a database specially conceived for the said simulator (14) and allowing editing and representation in interactive 3D, of marine depths.

14. Scuba diving simulator according to claim 8 wherein it is equipped with didactic software and with a database on scuba diving techniques specially conceived for said simulator and stocked at the instructor's computer (8) or recorded on CDs.

15. Scuba diving simulator according to claim 8 wherein it is equipped with a software that generates in real-time, for a given diving itinerary (72) parameters such as positioning (84), air consumption, orientation and depths (82).

16. Scuba diving simulator according to claim 8 wherein further to the computer monitor (26) placed inside the viewer (18) it may include a second monitor (66) placed outside the viewer (18) this second monitor allowing the instructor (12) to accompany, in immersion, the diver (2).

17. Scuba diving simulator according to claim 13, wherein it contains a software and a database allowing the selection of a diving site, a virtual itinerary (72) in the said site and the view of the said site in interactive 3D in the monitor (26) of the viewer (18).

18. Scuba diving simulator according to claim 4, wherein it is provided for a diver with a tuba (46) to raise the viewer (18) on the column (20) and to fix the said viewer at required level.

19. Scuba diving simulator according to claim 4 wherein it is provided to fix the viewer (18) at half of the depth of the column (20) for learning and practice of diving with a narguile (48).

20. Scuba diving simulator according to claim 6, wherein the movement of the retention winch (62) of the viewer (18), during the lowering and the raising of a diver is controlled by said diver or by his instructor (12).

21. Scuba diving simulator according to claim 6, wherein the computer (8) of a instructor (12) is connected to a mobile phone (88) and allows a diver (2) to have access to said phone by the cable (64) and to communicate through the internet.

## Patentansprüche

1. Tauchsimulator, für das Lernen und die Ausübung des Sporttauchens in gesicherter Umgebung, z. B. in einem Schwimmbecken, **dadurch gekennzeichnet, das** er aus einem unter Wasser angeordneten Gerät (6) besteht, das einen Bildbetrachter (18), der in der Lage ist, für einen Unterseetaucher die physikalischen Bedingungen, die er an einem wirklichen Tauchort antreffen kann zu simulieren, einen Computer für einen Ausbilder (12) mit einem Monitor (10), sowie einen in das Internetnetzwerk einfügbaren Computer (8) umfasst, mit welchem die genannten Geräte und Computer verbunden sind.

2. Tauschsimulator nach Anspruch 1, **dadurch gekennzeichnet, dass** das Gerät (6), mindestens aus vier Bestandteilen besteht:
- dem genannten Bildbetrachter (18), einer Tragsäule für den genannten Bildbetrachter (20), einem Sockel (24) und einem oberen Befestigungsgehäuse (22), das außer Wasser angeordnet ist und Mechanismen, sowie Anschlüsse beinhaltet.

3. Tauchsimulator nach Anspruch 2, **dadurch gekennzeichnet, dass** der Bildbetrachter (18) eine undurchlässige, wasserdichte und stoßsichere halbkugelförmige Schale ist, die mindestens einen Computermonitor (26) und eine Videokamera (30) umfasst, und dass eine Augenblende (28) und ein Lenker (16) an der genannten Schale befestigt sind.

4. Tauchsimulator nach Anspruch 2, **dadurch gekennzeichnet dass** in der Säule (20) eine Vorrichtung zugefügt ist, welche es dem Bildbetrachter (18) ermöglicht, senkrecht auf der genannte Säule, nach oben und nach unten zu gleiten, wobei die genannte Vorrichtung einen Lenker (16) umfasst, in welchem Steuerungen und Griffe (34 bzw. 36) unterbracht sind, an welchen Griffen sich ein Taucher halten kann (2), derart, dass der Taucher von den Bewegungen des genannten Bildbetrachters mitgenommen wird.

5. Tauchsimulator nach Anspruch 2, **dadurch gekennzeichnet, dass** er eine Zusatzvorrichtung (68) umfasst, die z. B. durch eine Pumpe (70) versorgt wird, welche in der Lage ist, Wasser unter Druck um einen Taucher herum einzuspritzen, um Strömungen zu erzeugen, die den Bewegungen des genannten Tauchers (2) entgegenwirken.

6. Tauchsimulator nach Anspruch 1, **dadurch gekennzeichnet dass der** mit Laufschienen (58) versehene Bildbetrachter (18) sich auf einem gespannten und mit einer Verankerung (56) beschwerten Kabel (54) bewegt.

7. Tauchsimulator nach Anspruch 3, **dadurch gekennzeichnet dass** es die Videokamera (30) dem Taucher (2) ermöglicht, von einem Ausbilder (12) der sich außer Wasser befindet und derart ausgerüstet ist, um auf seinem Monitorbildschirm (10) das Bild des Tauchers zu empfangen andauernd gesehen und überwacht zu sein.

8. Tauchsimulator nach Anspruch 3, **dadurch gekennzeichnet dass** der im Bildbetrachter (18) angeordnete Computermonitor (26) derart ausgerüstet ist, um unmittelbar von einem (dem) Ausbilder (12) oder über das Internet-Netzwerk (13) Bilder und Meldungen zu erhalten.

9. Tauchsimulator nach Anspruch 3, **dadurch gekennzeichnet dass** der Bildbetrachter an der Säule (20) angelenkt ist, und dass seine Stellung je nach dem Sehwinkel eines Tauchers geändert und angepasst werden kann.

10. Tauchsimulator nach Anspruch 3, **dadurch gekennzeichnet dass** der Bildbetrachter (18) über den im Allgemeinen mit zwei Griffen (34) und (36) versehenen Lenker (16), über zwei Steuerhebel (40) und (42) und über Bolzen an einem Bedienungsfeld (38) verfügt, und dass die genannten Vorrichtungen für die Betätigung des Computers eines Ausbilders (8) und des Monitors (26) vorgesehen sind.

11. Tauchsimulator nach Anspruch 3, **dadurch gekennzeichnet dass** der Lenker (16) an der Stelle (32) an welcher er an den Bildbetrachter befestigt wird, mit Sensoren zur Druckmessung des durch einen Taucher ausgeübten Drucks versehen ist, und dass die genannten Sensoren derart geeicht sind, um den genannten Druck in eine gleichwertige Geschwindigkeit des genannten Tauchers im Wasser umzurechnen.

12. Tauchsimulator nach Anspruch 3, **dadurch gekennzeichnet dass** der Bildbetrachter eine abnehmbare Augenblende (28) aufweist.

13. Tauchsimulator nach Anspruch 8, **dadurch gekennzeichnet dass** er derart ausgerüstet ist, um den Zugriff auf eine Software und auf eine Datenbank zu ermöglichen, die speziell für den genannten Simulator ausgestaltet sind (14) und die die Darstellung in 3D des Meeresbodens dialogführend ermöglichen.

14. Tauchsimulator nach Anspruch 8, **dadurch gekennzeichnet dass** er mit einer Lehrsoftware und mit einer Datenbank mit technischen Tauchdaten versehen ist, die speziell für den genannten Simulator ausgearbeitet und im Computer des Ausbilders (8) abgespeichert oder in den CD-ROMs (9) gebrannt sind.

15. Tauchsimulator nach Anspruch 8, **dadurch gekennzeichnet dass** er mit einer Software versehen ist, die in Echtzeit für eine bestimmte Tauchstrecke (72) die Daten wie die Stellung (84), den Luftverbrauch, die Orientierung und die Tiefe (82) erzeugt.

16. Tauchsimulator nach Anspruch 8, **dadurch gekennzeichnet dass** er außer dem innerhalb des Bildbetrachters (18) angeordneten Computermonitor (26) einen zweiten Monitor (66), der ausserhalb des Bildbetrachters (18) angeordnet ist umfassen kann, wobei es dieser zweite Monitor dem Ausbilder (12) ermöglicht, den Taucher (2) beim Tauchen zu begleiten.

17. Tauchsimulator nach Anspruch 13, **dadurch gekennzeichnet dass** er eine Software und eine Datenbank umfasst, die die Auswahl eines Tauchorts, einer virtuellen Strecke (72) innerhalb des Tauchorts und die Ansicht des genannten Tauchorts in 3D dialogführend im Monitor (26) des Bildbetrachters (18) ermöglichen.

18. Tauchsimulator nach Anspruch 4, **dadurch gekennzeichnet dass** es für einen Taucher mit einem Schnorchel (46) vorgesehen ist, den Bildbetrachter (18) wieder auf die Säule (20) zu montieren, und den genannten Bildbetrachter an der angebrachten Höhe zu befestigen.

19. Tauchsimulator nach Anspruch 4, **dadurch gekennzeichnet dass** es vorgesehen ist, den Bildbetrachter (18) für das Lernen und die Ausübung des Seiltauchens (48) auf halber Höhe der Säule (20) zu befestigen.

20. Tauchsimulator nach Anspruch 6, **dadurch gekennzeichnet dass** die Bewegung der Rückhaltwinde (62) des Bildbetrachters (18), beim Abstieg und beim Aufstieg eines Tauchers vom genannten Taucher (2) oder von seinem Ausbilder gesteuert wird.

21. Tauchsimulator nach Anspruch 6, **dadurch gekennzeichnet dass** der Computer (8) eines Ausbilders (12) mit einem Mobilfunkgerät (88) verbunden ist, und es einem Taucher (2) ermöglicht, über Kabel (64) auf das genannte Funkgerät zuzugreifen und über das Internet-Netzwerk zu kommunizieren.
